# FASCICULE DE BREVET EUROPEEN

(11) **EP 3 310 039 B1**
(45) Date de publication et mention de la délivrance du brevet: **17.10.2018**
(21) Numéro de dépôt: 17195193.2
(22) Date de dépôt: 06.10.2017
(51) Int. Cl.: H04N 5/3745, H04N 5/378, H04N 5/376

(54) **DISPOSITIF ÉLECTRONIQUE D'ANALYSE D'UNE SCÈNE**
ELEKTRONISCHE VORRICHTUNG ZUR ANALYSE EINER SZENE
ELECTRONIC DEVICE FOR ANALYSING A SCENE

(30) Priorité: 11.10.2016 FR 1659807
(43) Date de publication de la demande: 18.04.2018
(73) Titulaire: Commissariat à l'Energie Atomique et aux Energies Alternatives, 75015 Paris (FR)
(72) Inventeur: GUICQUERO, William, 91440 BURES-SUR-YVETTE (FR); VERDANT, Arnaud, 38330 SAINT-NAZAIRE-LES-EYMES (FR)
(74) Mandataire: Cabinet Beaumont

(56) Documents cités:
- EP-A1- 2 933 995
- WO-A1-2008/061268
- WO-A1-2015/192062

## Description

### Domaine

La présente demande concerne un dispositif électronique d'analyse d'une scène, et vise plus particulièrement un dispositif d'acquisition d'un signal représentatif de caractéristiques optiques d'une scène.

### Exposé de l'art antérieur

Il est connu d'acquérir une image d'une scène au moyen d'un capteur d'images comprenant une pluralité de pixels (ou cellules élémentaires) identiques ou similaires, par exemple agencés en matrice selon des lignes et des colonnes. Chaque pixel comprend par exemple une photodiode dont la capacité est déchargée par un photocourant en fonction d'une intensité lumineuse reçue. Traditionnellement, lors d'une phase d'acquisition d'une image, chaque pixel est d'abord réinitialisé par rechargement de sa photodiode à une tension de réinitialisation. La photodiode est ensuite isolée du noeud d'application de la tension de réinitialisation, et la tension aux bornes de la photodiode décroit en fonction de l'intensité lumineuse reçue par le pixel. Après une période d'intégration prédéterminée identique pour tous les pixels du capteur, chaque pixel fournit un signal analogique de sortie représentatif de la tension aux bornes de sa photodiode. Ce signal est numérisé par un circuit de conversion analogique-numérique, et constitue la valeur de sortie du pixel. L'ensemble des valeurs de sortie des pixels du capteur constitue une image de la scène.

Pour pallier certains inconvénients des capteurs d'images traditionnels, notamment en termes de dynamique, de rapport signal sur bruit, et/ou de consommation, on a proposé des capteurs d'images à codage temporel, dans lesquels chaque pixel comprend un comparateur comparant la tension aux bornes de la photodiode à une tension de référence. Lors d'une phase d'acquisition d'une image, chaque pixel est d'abord réinitialisé par rechargement de sa photodiode à une tension de réinitialisation. La photodiode de chaque pixel est ensuite isolée du noeud d'application de la tension de réinitialisation, et la tension aux bornes de la photodiode varie en fonction de l'intensité lumineuse reçue par le pixel. Lorsque la tension aux bornes de la photodiode d'un pixel atteint la tension de référence, la sortie du comparateur change d'état. On dit que le pixel s'allume. Le pixel signale alors sa position à un circuit de lecture externe au pixel, selon un protocole de communication asynchrone de type "handshake", comprenant l'émission, par le pixel, d'un signal de requête en lecture d'adresse à l'attention du circuit de lecture, suivie de l'émission, par le circuit de lecture, d'un signal d'acquittement à l'attention du pixel, puis de l'émission, par le pixel, d'un signal d'indication d'adresse à l'attention du circuit de lecture. L'instant de lecture de l'adresse du pixel par le circuit de lecture est mémorisé et constitue la valeur de sortie du pixel. Lorsque plusieurs pixels s'allument simultanément, un arbitrage peut être réalisé par le circuit de lecture, pour fixer l'ordre de lecture des pixels. Un tel capteur est décrit par exemple dans la demande internationale WO 2008/061268 A1. Un inconvénient de ce type de capteurs est lié à la complexité et à l'encombrement des circuits de communication asynchrone prévus pour permettre à chaque pixel, lorsqu'il s'allume, de signaler sa position au circuit de lecture. En outre, du fait de l'utilisation d'un protocole de communication asynchrone de type "handshake", des retards variables peuvent survenir entre l'instant effectif d'allumage d'un pixel et l'instant de réception de l'adresse du pixel par le circuit de lecture. Ceci peut provoquer des artefacts parasites dans l'image et/ou des pertes d'information, par exemple lorsqu'un nombre élevé de pixels du capteur s'allument simultanément ou dans un intervalle de temps court.

### Résumé

Ainsi un mode de réalisation prévoit un dispositif électronique d'analyse d'une scène, comportant une pluralité de pixels reliés à un circuit de lecture par une même première piste conductrice, dans lequel :
chaque pixel est adapté à détecter une occurrence d'un premier évènement caractéristique de la scène et à émettre un signal d'indication d'événement sur la première piste conductrice lorsqu'il détecte une occurrence du premier événement ; et
le circuit de lecture est adapté à lire sur la première piste conductrice les signaux d'indication d'événement émis par les pixels, et à en déduire des caractéristiques de la scène, sans émettre de signaux d'acquittement d'événement à destination des pixels,
et dans lequel chaque pixel comprend en outre un premier noeud de synchronisation, chaque pixel étant configuré pour, lorsqu'il détecte une occurrence du premier événement, attendre de recevoir un signal de synchronisation sur son premier noeud de synchronisation pour émettre le signal d'indication d'événement sur la première piste conductrice, ou émettre un signal de synchronisation via son premier noeud de synchronisation avant d'émettre le signal d'indication d'événement sur la première piste conductrice.

Selon un mode de réalisation, les pixels sont reliés au circuit de lecture par une deuxième piste conductrice, via leur premier noeud de synchronisation.

Selon un mode de réalisation, chaque pixel est adapté, lorsqu'il détecte une occurrence du premier événement, à :
émettre le signal de synchronisation sur la deuxième piste conductrice ; puis
après un intervalle de temps prédéterminé, émettre le signal d'indication d'événement sur la première piste conductrice.

Selon un mode de réalisation, la durée du signal de synchronisation est inférieure à la durée des signaux d'indication d'événement.

Selon un mode de réalisation, les signaux de synchronisation sont lus par le circuit de lecture sur la deuxième piste conductrice et sont utilisés par le circuit de lecture pour synchroniser des opérations de décodage des signaux d'indication d'événement lus sur la première piste conductrice.

Selon un mode de réalisation, le circuit de lecture est adapté à appliquer sur la deuxième piste conductrice le signal de synchronisation sous la forme d'une succession de fronts de synchronisation, et dans lequel chaque pixel est adapté, lorsqu'il détecte une occurrence du premier évènement, à attendre un prochain front de synchronisation du signal de synchronisation, puis, à réception de ce front, à émettre le signal d'indication d'évènement sur la première piste conductrice.

Selon un mode de réalisation, chaque pixel comprend en outre un deuxième noeud de synchronisation, les pixels étant reliés en une chaine fermée par leurs premiers et deuxièmes noeuds de synchronisation, les pixels étant adaptés à faire circuler le signal de synchronisation sous la forme d'un jeton de synchronisation dans la chaîne pendant une phase d'analyse d'une scène, de façon que, à tout instant, un unique pixel de la chaîne soit en possession du jeton de synchronisation.

Selon un mode de réalisation, chaque pixel est adapté, lorsqu'il détecte une occurrence du premier évènement, à attendre de recevoir le jeton de synchronisation, puis, à réception du jeton, à émettre le signal d'indication d'évènement sur la première piste conductrice.

Selon un mode de réalisation, le démarrage de la circulation du jeton dans la chaîne de pixels pendant une phase d'analyse est déclenché par la détection d'un premier évènement par un pixel du dispositif.

Selon un mode de réalisation, le circuit de lecture est adapté à partir du signal lu sur la première piste conductrice, à détecter tous les évènements signalés par les pixels, y compris lorsque plusieurs pixels émettent simultanément un signal d'indication d'évènement sur la première piste conductrice.

Selon un mode de réalisation, des pixels différents sont adaptés à émettre sur la première piste conductrice des signaux d'indication d'évènement en courant ou en tension de formes différentes lorsqu'ils détectent une occurrence du premier évènement.

Selon un mode de réalisation, le circuit de lecture est adapté à analyser les formes des signaux d'indication d'évènement lus sur la première piste conductrice, et à en déduire les positions des pixels ayant émis ces signaux de façon à reconstruire une image de la scène.

Selon un mode de réalisation, les signaux d'indication d'évènement émis sur la première piste conductrice par les différents pixels lorsqu'ils détectent une occurrence du premier évènement sont des signaux en courant de même forme.

Selon un mode de réalisation, le dispositif comporte des pixels de natures différentes adaptés à détecter des évènements de natures différentes, les signaux d'indication d'évènement émis par les pixels étant de même forme pour des pixels de même nature et de formes différentes pour des pixels de natures différentes.

Selon un mode de réalisation, le circuit de lecture est adapté à compter les signaux d'indication d'évènement lus sur la première piste conductrice pendant des plages de temps prédéterminées d'une phase d'analyse, de façon à construire un histogramme caractéristique de la scène.

Selon un mode de réalisation, chaque pixel est en outre adapté à détecter une occurrence d'un deuxième évènement caractéristique de la scène et, lorsqu'il détecte une occurrence du deuxième évènement, à émettre sur la première piste conductrice un signal d'indication d'évènement différent du signal d'indication d'évènement qu'il émet lorsqu'il détecte une occurrence du premier évènement.

Un autre mode de réalisation prévoit un dispositif électronique d'analyse d'une scène, comportant une pluralité de pixels reliés à un circuit de lecture par une même première piste conductrice, dans lequel :
chaque pixel est adapté à détecter une occurrence d'un premier évènement caractéristique de la scène et à émettre un signal d'indication d'évènement sur la première piste conductrice lorsqu'il détecte une occurrence du premier événement ; et
le circuit de lecture est adapté à lire sur la première piste conductrice les signaux d'indication d'évènement émis par les pixels, et à en déduire des caractéristiques de la scène, sans émettre de signaux d'acquittement d'évènement à destination des pixels,
et dans lequel le circuit de lecture est adapté à partir du signal lu sur la première piste conductrice, à détecter tous les évènements signalés par les pixels, y compris lorsque plusieurs pixels émettent simultanément un signal d'indication d'évènement sur la première piste conductrice.

### Brève description des dessins

Ces caractéristiques et leurs avantages, ainsi que d'autres, seront exposés en détail dans la description suivante de modes de réalisation particuliers faite à titre non limitatif en relation avec les figures jointes parmi lesquelles :
la figure 1 est un schéma électrique simplifié d'un exemple d'un dispositif électronique d'analyse d'une scène selon un premier mode de réalisation ;
la figure 2 illustre schématiquement un exemple d'un mode de fonctionnement du dispositif de la figure 1 ;
la figure 3 est un schéma électrique simplifié d'un exemple d'un dispositif électronique d'analyse d'une scène selon un deuxième mode de réalisation ;
la figure 4 illustre schématiquement un exemple d'un mode de fonctionnement du dispositif de la figure 3 ;
la figure 5 illustre schématiquement un exemple d'un autre mode de fonctionnement du dispositif de la figure 3 ;
la figure 6 est un schéma électrique simplifié d'un exemple d'un dispositif électronique d'analyse d'une scène selon un troisième mode de réalisation ;
la figure 7 illustre schématiquement un exemple d'un mode de fonctionnement du dispositif de la figure 6 ; et
la figure 8 illustre schématiquement le fonctionnement d'un circuit de lecture d'un dispositif électronique d'analyse d'une scène selon un mode de réalisation.

### Description détaillée

De mêmes éléments ont été désignés par de mêmes références aux différentes figures et, de plus, les diverses figures ne sont pas tracées à l'échelle. Par souci de clarté, seuls les éléments qui sont utiles à la compréhension des modes de réalisation décrits ont été représentés et sont détaillés. En particulier, la réalisation des pixels et des circuits de lecture des dispositifs d'analyse décrits n'a pas été détaillée, les détails de réalisation de ces éléments étant à la portée de l'homme du métier à partir des indications fonctionnelles fournies dans la présente description. Sauf précision contraire, les expressions "approximativement", "sensiblement", et "de l'ordre de" signifient à 10 % près, de préférence à 5 % près.

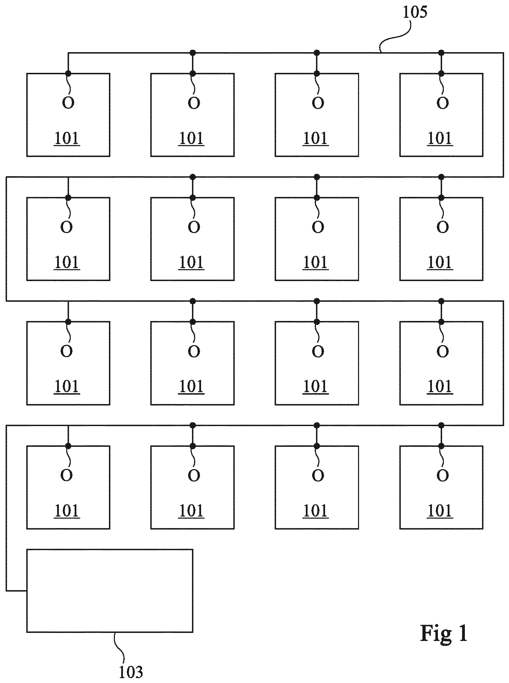

La figure 1 est un schéma électrique simplifié d'un exemple d'un dispositif électronique d'analyse d'une scène selon un premier mode de réalisation. Le dispositif de la figure 1 comprend une pluralité de pixels 101, par exemple identiques ou similaires, et un circuit de lecture 103. Dans l'exemple représenté, le dispositif d'analyse comprend une matrice de 4x4 pixels 101. Les modes de réalisation décrits ne se limitent bien entendu pas à cet exemple particulier. Les pixels 101 sont connectés au circuit de lecture 103 par une même piste conductrice 105. Chaque pixel 101 comprend un photodétecteur (non détaillé), par exemple une photodiode, adapté à fournir un signal électrique représentatif d'un niveau d'éclairement reçu par le pixel. Chaque pixel 101 est adapté à détecter une occurrence d'un évènement caractéristique d'une propriété optique de la scène, et à émettre un signal d'indication d'évènement sur la piste conductrice 105 lorsqu'il détecte une occurrence de l'événement. Par évènement, on entend ici le passage d'une grandeur caractéristique de la scène au-dessus ou au-dessous d'un seuil. A titre d'exemple, chaque pixel peut être adapté à détecter le passage d'un seuil de tension aux bornes de sa photodiode pendant une phase d'intégration du pixel (ou allumage du pixel), et/ou le passage d'un seuil de différence temporelle entre le temps mis par le pixel pour s'allumer pendant une phase d'intégration et le temps mis par le même pixel pour s'allumer lors d'une phase d'intégration précédente, et/ou le passage d'un seuil de différence temporelle entre le temps mis par le pixel pour s'allumer et le temps mis par un autre pixel du dispositif pour s'allumer pendant une même phase d'intégration, et/ou le passage d'un seuil d'un nombre d'occurrences d'un certain type d'événement. Dans l'exemple représenté, chaque pixel 101 comprend un noeud de sortie o connecté à la piste conductrice 105, et est adapté, lorsqu'il détecte une occurrence de l'évènement qu'il surveille, à appliquer un signal d'indication d'évènement sur son noeud o.

Selon un aspect des modes de réalisation décrits, le circuit de lecture 103 est adapté à générer un signal représentatif de caractéristiques de la scène à partir des signaux d'indication d'évènement lus sur la piste conductrice 105, sans émettre de signaux d'acquittement d'évènement à destination des pixels 101. En d'autres termes, le dispositif d'analyse ne met pas en oeuvre de mécanisme de requête-acquittement de type "handshake" lors de l'évacuation des données acquises par les pixels.

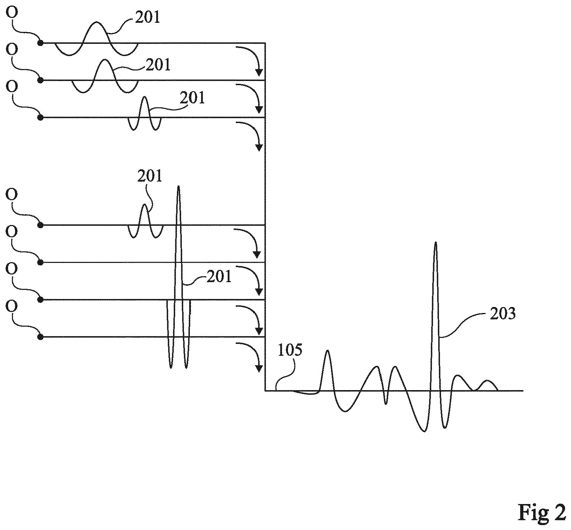

La figure 2 illustre schématiquement un exemple d'un mode de fonctionnement du dispositif de la figure 1. Sur la figure 2, on a représenté, disposés en colonne, les noeuds de sortie o des différents pixels 101 du dispositif, et la piste conductrice 105 connectant les pixels 101 au circuit de lecture 103 du dispositif.

A titre d'exemple, tous les pixels 101 surveillent un même type d'évènement, par exemple le passage d'un même seuil de tension aux bornes de leur photodiode. Lors d'une phase d'analyse de la scène, tous les pixels 101 sont par exemple réinitialisés puis intégrés en même temps. Lorsqu'un pixel 101 détecte une occurrence de l'évènement qu'il surveille, il applique sur son noeud de sortie o un signal d'indication d'évènement 201, par exemple une impulsion de courant, de tension ou de charges.

Selon un premier exemple de fonctionnement, les signaux d'indication d'évènement 201 émis par les différents pixels 101 sur la piste conductrice 105 présentent des formes (ou motifs) différentes. Le circuit de lecture 103 peut ainsi, lorsqu'il reçoit un signal d'indication d'évènement via la piste conductrice 105, déterminer l'origine de ce signal, c'est-à-dire la position du pixel ayant émis ce signal. Ce mode de fonctionnement permet au circuit de lecture 103 de détecter à tout instant les évènements signalés par les pixels, y compris lorsque plusieurs pixels signalent simultanément des détections d'événements. Les signaux 201 émis par les différents pixels 101 se cumulent ou se superposent sur la piste conductrice 105 pour former un signal 203. Le signal 203 est lu par le circuit de lecture 103, et peut être analysé par ce dernier pour en déduire des caractéristiques de la scène. A titre d'exemple, le circuit de lecture 103 est adapté à traiter le signal 203 par des opérations analogiques et/ou numériques de filtrage, pour déterminer les instants d'émission ou la signature des signaux d'indication d'évènement 201 par les différents pixels 101 du dispositif pendant une phase d'analyse, et reconstruire ainsi une image de la scène vue par le dispositif. A titre de variante, le circuit de lecture 103 ne détermine pas les positions des pixels 101 émettant des signaux d'indication d'évènement 201 pendant la phase d'analyse, mais se contente de compter le nombre d'évènements détectés pendant des plages de temps prédéterminées de la phase d'analyse, de façon à construire un histogramme caractéristique de la scène. Les motifs des différents signaux d'indication d'évènement 201 sont de préférence non corrélés ou faiblement corrélés, de façon à faciliter l'extraction de l'information recherchée à partir du signal 203, notamment lorsqu'un nombre élevé de pixels 101 s'allument en même temps ou dans un intervalle de temps court. Les signaux d'indication d'évènement 201 peuvent avoir des formes variées choisies selon les besoins de l'application et/ou en fonction de la nature ou modalité des signaux (courant, tension ou charges). A titre d'exemple, les signaux d'indication d'évènement 201 peuvent être des impulsions en créneau présentant des largeurs et/ou des amplitudes différentes. A titre de variante, les signaux d'indication d'évènement 201 peuvent être des impulsions en marches d'escalier ayant des propriétés spécifiques aux différents pixels. A titre de variante, les signaux d'indication d'évènement 201 peuvent être des trains d'impulsions dans lesquels l'écartement et/ou le nombre des impulsions porte une information quant à la position du pixel. A titre de variante, les signaux d'indication d'évènement 201 peuvent être des oscillations ayant des propriétés de phase, fréquence et/ou amplitude spécifiques aux différents pixels, par exemple des oscillations en créneaux, par exemple générées par un oscillateur en anneaux. A titre de variante, on peut prévoir des signaux 201 impulsionnels présentant des formes de type fenêtres d'ondelettes dyadiques, gaussiennes, cosinus surélevés, etc. A titre de variante, on peut prévoir des signaux d'indication d'évènement 201 sous forme de motifs binaires du type habituellement utilisé dans le domaine des télécommunications tels que des séquences de Gold.

Selon un deuxième exemple de fonctionnement, les signaux d'indication d'évènement 201 émis par les différents pixels 101 sur la piste conductrice 105 présentent des formes identiques ou similaires. Dans ce cas, le circuit de lecture 103 ne peut pas déterminer l'origine des pixels émettant les signaux 201, et ne peut donc pas reconstruire une image de la scène à partir du signal 203. Cependant, le circuit 103 peut être configuré pour déterminer certaines caractéristiques de la scène à partir du signal 203, par exemple par comptage du nombre d'évènements signalés par les pixels 101. A titre d'exemple, le circuit 103 compte le nombre d'évènements détectés pendant des plages de temps prédéterminées d'une phase d'analyse, de façon à construire un histogramme caractéristique de la scène. Les signaux d'indication d'évènement 201 sont alors de préférence des impulsions en courant adaptées à s'additionner sur la piste conductrice 105. Ceci permet au circuit de lecture 103 de déterminer à tout instant, par des mesures d'intensité de courant dans la piste conductrice 105, le nombre exact d'évènements signalés par les pixels, y compris lorsque plusieurs pixels signalent simultanément des détections d'événements.

A titre de variante, dans les premier et/ou deuxième exemples de fonctionnement susmentionnés, chaque pixel 101 peut être adapté à détecter plusieurs types d'évènements distincts, par exemple le passage d'un seuil de tension aux bornes de sa photodiode et le passage d'un seuil de différence temporelle entre le temps mis par le pixel pour s'allumer pendant une phase d'intégration et le temps mis par le même pixel pour s'allumer pendant une phase d'intégration précédente. Chaque pixel 101 peut alors être configuré pour émettre sur la piste conductrice 105 des signaux d'indication d'évènement différents lorsqu'il détecte des occurrences d'évènements différents. Le circuit de lecture 103 est alors adapté à identifier les différents évènements à partir du signal 203 reçu sur la piste conductrice 105. A titre d'exemple, chaque pixel peut être adapté à détecter des dépassements de seuils d'intensité lumineuse (ou allumage) dans plusieurs couleurs ou gammes de longueurs d'onde d'éclairement distinctes, et à émettre sur la piste conductrice 105 des signaux d'indication d'évènement de formes distinctes pour signaler des allumages dans les différentes couleurs qu'il surveille. Ce mode de fonctionnement présente un intérêt tout particulier pour les applications d'imagerie multi-spectrale. Pour une couleur donnée tous les pixels du capteur peuvent avoir la même signature, ou des signatures distinctes.

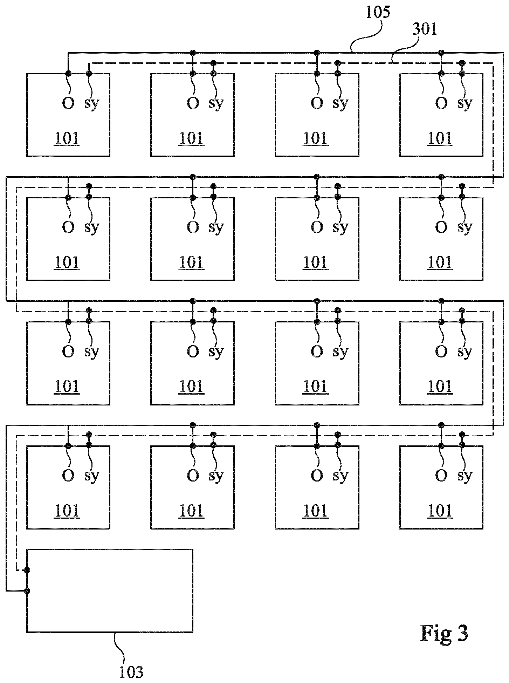

La figure 3 est un schéma électrique simplifié d'un exemple d'un dispositif électronique d'analyse d'une scène selon un deuxième mode de réalisation. Le dispositif de la figure 3 comprend les mêmes éléments que le dispositif de la figure 1, agencés sensiblement de la même manière, et comprend en outre une deuxième piste conductrice 301 distincte de la piste conductrice 105 (c'est-à-dire non connectée à la piste 105), connectant les pixels 101 au circuit de lecture 103. La piste conductrice 301 est destinée à transporter un signal de synchronisation (éventuellement géré de façon asynchrone) facilitant la démodulation, par le circuit de lecture 103, du signal 203 lu sur la piste 105. Dans l'exemple de la figure 3, chaque pixel 101 comporte, outre son noeud de sortie o, un noeud de synchronisation sy connecté à la piste conductrice 301.

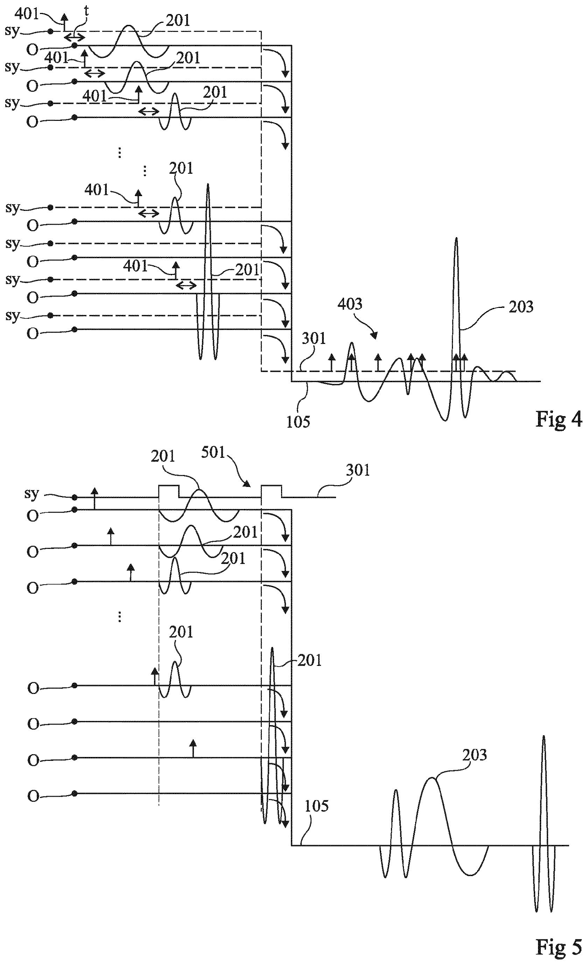

La figure 4 illustre schématiquement un exemple d'un mode de fonctionnement du dispositif de la figure 3. Sur la figure 4, on a représenté, disposés en colonne, les noeuds de sortie o et les noeuds de synchronisation sy des différents pixels 101 du dispositif, ainsi que les pistes conductrices 105 et 301 connectant les pixels 101 au circuit de lecture 103.

Le mode de fonctionnement de la figure 4 diffère du mode de fonctionnement décrit en relation avec la figure 2 principalement en ce que, dans l'exemple de la figure 4, chaque pixel 101 est configuré pour, lorsqu'il détecte une occurrence d'un évènement qu'il surveille, non seulement émettre sur la piste conductrice 105, via son noeud de sortie o, un signal d'indication d'évènement 201, mais émettre en outre sur la piste conductrice 301, via son noeud de synchronisation sy, une impulsion de synchronisation 401. Les impulsions de synchronisation 401 ont de préférence une durée inférieure à la durée des impulsions d'indication d'évènement 201, de façon à limiter les risques de collision en cas de détections d'évènements simultanées par plusieurs pixels du dispositif. Les impulsions de synchronisation 401 sont par exemple des impulsions de courant, de tension ou de charges. Les impulsions de synchronisation 401 émises par les différents pixels 101 du dispositif peuvent être identiques ou similaires. Les impulsions de synchronisation 401 sont par exemple des impulsions de type Dirac. A titre d'exemple, lorsqu'un pixel détecte une occurrence d'un évènement qu'il surveille, il émet d'abord une impulsion de synchronisation 401 sur la piste conductrice 301, puis, après un intervalle de temps t prédéterminé identique pour tous les pixels du dispositif, un signal d'indication d'évènement 201 sur la piste conductrice 105. Le signal de synchronisation 403 transmis sur la piste conductrice 301, correspondant à la suite des impulsions de synchronisation 401 émises par les pixels 101, est lu par le circuit de lecture 103. Ce signal 401 permet de faciliter les opérations de démodulation du signal 203 par le circuit de lecture 103. Plus particulièrement le signal 403 est utilisé par le circuit de lecture 103 pour synchroniser les opérations de décodage du signal 203 lu sur la piste conductrice 105.

La figure 5 illustre schématiquement un autre exemple d'un mode de fonctionnement du dispositif de la figure 3. Sur la figure 5, on a représenté, disposés en colonne, les noeuds de sortie o des différents pixels 101 du dispositif, ainsi que la piste conductrice 105 connectant les pixels 101 au circuit de lecture 103. On a en outre représenté un signal périodique de synchronisation 501, par exemple un signal d'horloge, appliqué par le circuit de lecture 103, via la piste conductrice 301, sur les noeuds de synchronisation sy des différents pixels 101 du dispositif. Le mode de fonctionnement de la figure 5 diffère du mode de fonctionnement décrit en relation avec la figure 2 essentiellement en ce que, dans l'exemple de la figure 5, chaque pixel 101 est configuré pour, lorsqu'il détecte une occurrence d'un évènement qu'il surveille (les instants d'occurrence d'évènements sont représentés par des flèches verticales sur la figure 5), au lieu d'émettre immédiatement un signal d'indication d'évènement 201 sur son noeud de sortie o comme dans l'exemple de la figure 2, attendre un prochain front montant ou descendant (front montant dans l'exemple représenté) du signal de synchronisation 501 pour émettre le signal d'indication d'évènement 201. Ainsi, tous les pixels 101 ayant détecté des évènements entre deux fronts de synchronisation successifs du signal 501 émettent leurs signaux d'indication d'évènement 201 sensiblement en même temps. Le mode de fonctionnement de la figure 5 permet de faciliter le comptage des évènements par le circuit de lecture 103 et est tout particulièrement adapté à la réalisation d'histogrammes caractéristiques de la scène. A titre d'exemple, le signal de synchronisation 501 peut être choisi de façon que les intervalles de temps entre deux fronts de synchronisation successifs du signal 501 correspondent aux largeurs des classes de l'histogramme que l'on cherche à réaliser. On notera que le signal 501 peut être non périodique, c'est-à-dire présenter un espacement temporel variable entre deux fronts de synchronisation successifs, par exemple pour réaliser un histogramme présentant des classes de largeurs différentes. Dans le mode de réalisation de la figure 5, les signaux d'indication d'évènement 201 sont de préférence des impulsions en courant adaptées à s'additionner sur la piste conductrice 105, ce qui permet au circuit de lecture 103 de déterminer à tout instant, par des mesures d'intensité de courant dans la piste conductrice 105, le nombre d'évènements signalés par les pixels, y compris lorsque plusieurs pixels signalent simultanément des détections d'événements.

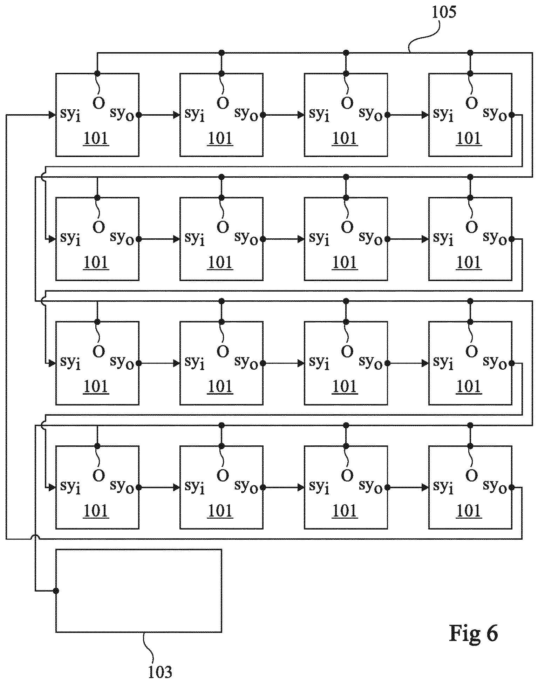

La figure 6 est un schéma électrique simplifié d'un exemple d'un dispositif électronique d'analyse d'une scène selon un troisième mode de réalisation. Le dispositif de la figure 6 comprend les mêmes éléments que le dispositif de la figure 1, agencés sensiblement de la même manière. Dans l'exemple de la figure 6, chaque pixel 101 comprend en outre un noeud syᵢ de réception d'un signal de synchronisation et un noeud syₒ de fourniture d'un signal de synchronisation. Les pixels 101 sont reliés en une chaîne fermée par l'intermédiaire de leurs noeuds de synchronisation syᵢ et syₒ, de façon que chaque pixel 101 ait son noeud syᵢ connecté au noeud syₒ d'un unique autre pixel 101 du dispositif.

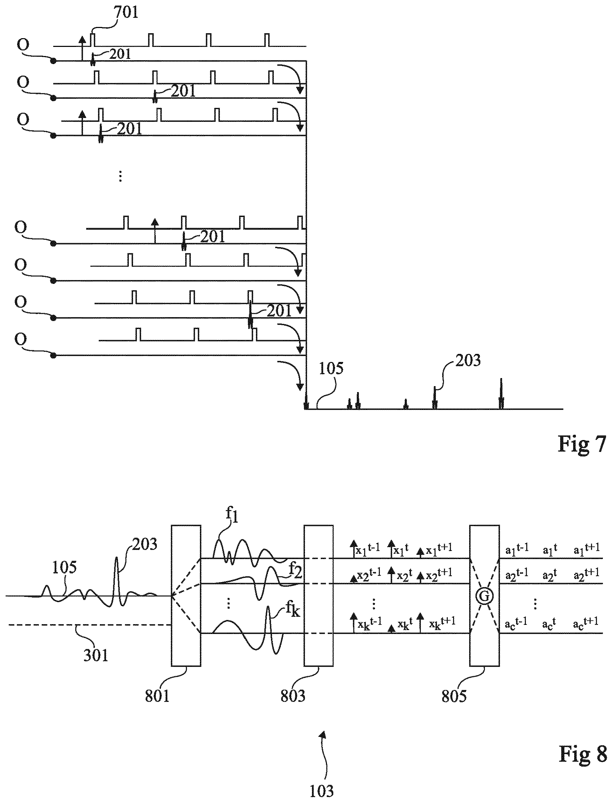

La figure 7 illustre schématiquement un exemple d'un mode de fonctionnement du dispositif de la figure 6. Sur la figure 7, on a représenté, disposés en colonne, les noeuds de sortie o des différents pixels 101 du dispositif, ainsi que la piste conductrice 105 connectant les pixels 101 au circuit de lecture 103. On a en outre représenté un signal jeton 701, par exemple une impulsion de tension, de courant ou de charges, parcourant un à un les pixels du dispositif par l'intermédiaire des noeuds syᵢ et syₒ des pixels. A titre d'exemple, lorsqu'un pixel reçoit le signal jeton 701 sur son noeud syᵢ, il le reproduit sur son noeud syₒ pour le transmettre au pixel suivant de la chaîne, de façon que, à tout instant, seul un unique pixel 101 de la chaîne soit en possession du jeton. Le jeton 701 circule par exemple en permanence dans la chaîne de pixels 101 pendant une phase d'analyse de la scène par le dispositif. Le mode de fonctionnement de la figure 7 diffère du mode de fonctionnement décrit en relation avec la figure 2 essentiellement en ce que, dans l'exemple de la figure 7, chaque pixel 101 est configuré pour, lorsqu'il détecte une occurrence d'un évènement qu'il surveille (les instants d'occurrence d'évènements sont représentés par des flèches verticales sur la figure 7), au lieu d'émettre immédiatement un signal d'indication d'évènement 201 sur son noeud de sortie o comme dans l'exemple de la figure 2, attendre le prochain passage du jeton de synchronisation 701 par le pixel pour émettre le signal d'indication d'évènement 201. Ainsi, dans le mode de fonctionnement de la figure 7, à un instant donné, seul un pixel 101 est adapté à émettre sur la piste conductrice 105, ce qui permet de faciliter le décodage du signal 203 par le circuit de lecture 103. A titre d'exemple, les signaux d'indication d'évènement 201 émises par les pixels peuvent avoir la même forme générale, par exemple une forme en Dirac ou en créneau, mais présenter des amplitudes différentes correspondant à des positionnements de pixels différents et/ou à des types d'évènements différents. A titre de variante, le démarrage de la circulation du jeton 701 dans la chaîne de pixels 101 pendant une phase d'analyse peut être déclenché uniquement suite à la détection d'un premier évènement par l'un des pixels 101. Ceci permet avantageusement de limiter la consommation du dispositif liée à la circulation du jeton 701 en début d'analyse, lorsqu'aucun évènement ne s'est encore produit.

On notera que dans le mode de fonctionnement de la figure 7, les pixels peuvent avantageusement être mis en veille en permanence, et réveillés uniquement à chaque passage du jeton. A chaque réveil, le pixel peut alors vérifier si une occurrence d'un évènement s'est produit pendant la période de veille précédente, et décider en conséquence d'émettre ou non un signal d'indication d'événement. Ceci permet de limiter de façon significative la consommation du circuit. En particulier, dans le cas où chaque pixel comprend un comparateur adapté à comparer une grandeur représentative de son niveau d'éclairement à un seuil, le comparateur peut être mis en veille entre deux passages du jeton.

La figure 8 illustre schématiquement, sous forme de blocs fonctionnels, un exemple de réalisation du circuit de lecture 103 d'un dispositif électronique d'analyse d'une scène du type décrit en relation avec les figures 1 à 7.

Dans cet exemple, le circuit 103 comprend un bloc de filtrage 801 comportant un banc de k filtres (non détaillés) aux propriétés de filtrage distinctes, avec k entier supérieur à 1. Le bloc de filtrage 801 reçoit en entrée le signal de données 203 fourni sur la piste conductrice de sortie de données 105 des pixels, accompagné, le cas échéant (mode de réalisation de la figure 3), du signal de synchronisation fourni sur la piste conductrice de synchronisation 301 des pixels. Le bloc 801 fournit, respectivement sur k voies de sortie distinctes, k signaux f₁, f₂, ... fₖ, correspondant aux signaux de sortie des différents filtres du banc.

Le circuit 103 de la figure 8 comprend en outre un bloc d'évaluation de puissance 803. Le bloc 803 reçoit, respectivement sur k voies d'entrée distinctes, les k signaux de sortie f₁, f₂, ... fₖ du bloc de filtrage 801. Le bloc 803 fournit, pour chaque signal d'entrée fᵢ, avec i entier allant de 1 à k, un signal de sortie xᵢ discrétisé dans le domaine temporel, représentatif de la puissance du signal d'entrée fᵢ, et, le cas échéant (mode de réalisation de la figure 3), synchronisé à l'aide du signal fourni sur la piste conductrice de synchronisation 301 des pixels. Plus particulièrement, pour chaque signal d'entrée fᵢ, chaque échantillon xᵢ^{t} du signal de sortie xᵢ correspondant est représentatif de la puissance du signal d'entrée fᵢ, intégrée dans l'intervalle temporel allant de t-1 à t, où t est la variable temporelle discrétisée. Dans l'exemple représenté, le bloc 803 comprend k voies de sortie distinctes fournissant respectivement les k signaux de sortie x₁, x₂, ... xₖ.

Le circuit 103 de la figure 8 comprend de plus un bloc 805 de transformation des signaux xᵢ de puissance de sortie des différents filtres par un opérateur d'analyse G permettant de remonter à des informations contenues dans la scène, et plus particulièrement au nombre de signaux d'indication d'évènement 201 de chaque type (chaque type de signal correspondant à une signature recherchée dans le signal d'entrée 203, et à la bande passante de l'un des filtres du banc de filtres 801) contenus dans le signal d'entrée 203 à chaque instant (ou intervalle de temps) t. A titre d'exemple, le bloc 805 peut réaliser un produit matriciel à l'aide de l'opérateur d'analyse G. Cette opération matricielle permet de générer une matrice A de c lignes par l colonnes résultant de la multiplication de X constitué de k lignes et l colonnes par G, où la matrice X comprend, dans chaque ligne de rang i, une suite de l valeurs de sortie successives xᵢ^{t} du signal xᵢ.. La matrice A comprend, dans chaque ligne de rang i, une suite de l valeurs de sortie successives aᵢ^{t} d'un signal de sortie aᵢ. Plus particulièrement, chaque échantillon aᵢ^{t} du signal de sortie aᵢ est représentatif du nombre d'évènements du type i dans l'intervalle temporel allant de t-1 à t, où t est la variable temps discrétisée. A titre d'exemple, la matrice G est la pseudo-inverse d'une représentation matricielle G⁺ des puissances associées aux sorties du banc de filtres pour des motifs générés par les différents types de signaux d'indication d'évènement recherchés. La matrice G⁺ est par exemple une matrice de k lignes par l colonnes, comprenant, dans chaque colonne de rang i, une suite de k valeurs successives mᵢ^{t} représentant les puissances associées à la sortie du banc de filtres pour un motif élémentaire de l'un des c types de signaux d'indication d'évènement recherchés. Dans l'exemple représenté, le bloc 805 comprend c voies de sortie distinctes fournissant respectivement les c signaux de sortie a₁, a₂, ... a_{c}.

Des modes de réalisation particuliers ont été décrits. Diverses variantes et modifications apparaîtront à l'homme de l'art. En particulier, bien que l'on ait décrit uniquement des exemples de dispositifs d'analyse dans lesquels tous les pixels 101 du dispositif sont reliés par une même piste conductrice 105 au circuit de lecture 103, les modes de réalisation décrits ne se limitent pas à ce cas particulier. A titre de variante, les pixels 101 peuvent être répartis en plusieurs groupes de plusieurs pixels chacun, les pixels de chaque groupe étant connectés au circuit de lecture 103 par une même piste conductrice 105 et les pixels de groupes distincts étant connectés au circuit de lecture 103 par des pistes conductrices 105 distinctes. Le cas échéant, les pixels de chaque groupe peuvent en outre être connectés au circuit de lecture 103 par une même piste conductrice de synchronisation 301 (mode de réalisation de la figure 3) ou former une chaîne fermée adaptée à la circulation d'un jeton de synchronisation 701 (mode de réalisation de la figure 6). A titre d'exemple, les pixels 101 du dispositif sont agencés en matrice selon des lignes et des colonnes, les différents groupes de pixels correspondant aux différentes lignes de pixels ou aux différentes colonnes de pixels de la matrice.

## Revendications

1. Dispositif électronique d'analyse d'une scène, comportant une pluralité de pixels (101) reliés à un circuit de lecture (103) par une même première piste conductrice (105), dans lequel :
chaque pixel (101) est adapté à détecter une occurrence d'un premier évènement caractéristique de la scène et à émettre un signal d'indication d'évènement (201) sur la première piste conductrice (105) lorsqu'il détecte une occurrence du premier événement ; et
le circuit de lecture (103) est adapté à lire sur la première piste conductrice (105) les signaux d'indication d'évènement (201) émis par les pixels (101), et à en déduire des caractéristiques de la scène, sans émettre de signaux d'acquittement d'évènement à destination des pixels (101),
**caractérisé en ce que** :
chaque pixel comprend en outre un premier noeud de synchronisation (sy, syᵢ), chaque pixel étant configuré pour, lorsqu'il détecte une occurrence du premier évènement, attendre de recevoir un signal de synchronisation (501) sur son premier noeud de synchronisation (sy, syᵢ) pour émettre le signal d'indication d'évènement (201) sur la première piste conductrice (105), ou émettre un signal de synchronisation (401 ; 701) via son premier noeud de synchronisation (sy) avant d'émettre le signal d'indication d'évènement (201) sur la première piste conductrice (105).

2. Dispositif selon la revendication 1, dans lequel les pixels (101) sont reliés au circuit de lecture (103) par une deuxième piste conductrice (301), via leur premier noeud de synchronisation (sy, syᵢ).

3. Dispositif selon la revendication 2, dans lequel chaque pixel (101) est adapté, lorsqu'il détecte une occurrence du premier évènement, à :
émettre le signal de synchronisation (401) sur la deuxième piste conductrice (301) ; puis
après un intervalle de temps (t) prédéterminé, émettre le signal d'indication d'évènement (201) sur la première piste conductrice (101).

4. Dispositif selon la revendication 3, dans lequel la durée du signal de synchronisation (401) est inférieure à la durée des signaux d'indication d'évènement (201).

5. Dispositif selon la revendication 3 ou 4, dans lequel les signaux de synchronisation (401) sont lus par le circuit de lecture (103) sur la deuxième piste conductrice (301) et sont utilisés par le circuit de lecture (103) pour synchroniser des opérations de décodage des signaux d'indication d'évènement (201) lus sur la première piste conductrice (105).

6. Dispositif selon la revendication 2, dans lequel le circuit de lecture (103) est adapté à appliquer sur la deuxième piste conductrice (301) le signal de synchronisation (501) sous la forme d'une succession de fronts de synchronisation, et dans lequel chaque pixel (101) est adapté, lorsqu'il détecte une occurrence du premier évènement, à attendre un prochain front de synchronisation du signal de synchronisation (501), puis, à réception de ce front, à émettre le signal d'indication d'évènement (201) sur la première piste conductrice (105).

7. Dispositif selon la revendication 1, dans lequel chaque pixel (101) comprend en outre un deuxième noeud de synchronisation (syₒ), les pixels étant reliés en une chaine fermée par leurs premiers (syᵢ) et deuxièmes (syₒ) noeuds de synchronisation, les pixels (101) étant adaptés à faire circuler le signal de synchronisation sous la forme d'un jeton de synchronisation (701) dans la chaîne pendant une phase d'analyse d'une scène, de façon que, à tout instant, un unique pixel (101) de la chaîne soit en possession du jeton de synchronisation (701).

8. Dispositif selon la revendication 7, dans lequel chaque pixel (101) est adapté, lorsqu'il détecte une occurrence du premier évènement, à attendre de recevoir le jeton de synchronisation (701), puis, à réception du jeton (701), à émettre le signal d'indication d'évènement (201) sur la première piste conductrice (105).

9. Dispositif selon la revendication 7 ou 8, dans lequel le démarrage de la circulation du jeton (701) dans la chaîne de pixels (101) pendant une phase d'analyse est déclenché par la détection d'un premier évènement par un pixel (101) du dispositif.

10. Dispositif selon l'une quelconque des revendications 1 à 9, dans lequel le circuit de lecture (103) est adapté à partir du signal (203) lu sur la première piste conductrice (105), à détecter tous les évènements signalés par les pixels (101), y compris lorsque plusieurs pixels émettent simultanément un signal d'indication d'évènement sur la première piste conductrice (105).

11. Dispositif selon la revendication 10, dans lequel des pixels (101) différents sont adaptés à émettre sur la première piste conductrice (105) des signaux d'indication d'évènement (201) en courant ou en tension de formes différentes lorsqu'ils détectent une occurrence du premier évènement.

12. Dispositif selon la revendication 11, dans lequel le circuit de lecture (103) est adapté à analyser les formes des signaux d'indication d'évènement (201) lus sur la première piste conductrice (105), et à en déduire les positions des pixels (101) ayant émis ces signaux de façon à reconstruire une image de la scène.

13. Dispositif selon la revendication 10, dans lequel les signaux d'indication d'évènement (201) émis sur la première piste conductrice (105) par les différents pixels (101) lorsqu'ils détectent une occurrence du premier évènement sont des signaux en courant de même forme.

14. Dispositif selon l'une quelconque des revendications 1 à 13, comportant des pixels (101) de natures différentes adaptés à détecter des évènements de natures différentes, les signaux d'indication d'évènement (201) émis par les pixels étant de même forme pour des pixels de même nature et de formes différentes pour des pixels de natures différentes.

15. Dispositif selon l'une quelconque des revendications 1 à 14, dans lequel le circuit de lecture (103) est adapté à compter les signaux d'indication d'évènement (201) lus sur la première piste conductrice (105) pendant des plages de temps prédéterminées d'une phase d'analyse, de façon à construire un histogramme caractéristique de la scène.

16. Dispositif selon l'une quelconque des revendications 1 à 15, dans lequel chaque pixel (101) est en outre adapté à détecter une occurrence d'un deuxième évènement caractéristique de la scène et, lorsqu'il détecte une occurrence du deuxième évènement, à émettre sur la première piste conductrice (105) un signal d'indication d'évènement (201) différent du signal d'indication d'évènement (201) qu'il émet lorsqu'il détecte une occurrence du premier évènement.

## Patentansprüche

1. Eine elektronische Vorrichtung zum Analysieren einer Szene, die eine Vielzahl von Pixeln (101) aufweist, die mit einer Ausleseschaltung (103) durch eine gleiche erste Leiterbahn (105) verbunden sind, wobei:
jedes Pixel (101) geeignet ist zum Detektieren eines Auftretens eines ersten Ereignisses, das für die Szene charakteristisch ist, und zum Senden eines Ereignisindikationssignals (201) auf der ersten Leiterbahn (105), wenn es ein Auftreten des ersten Ereignisses detektiert; und
die Ausleseschaltung (103) geeignet ist zum Lesen der durch die Pixel (101) gesendeten Ereignisindikationssignale (201) von der ersten Leiterbahn (105) und zum Ableiten davon Charakteristiken der Szene ohne Senden von Ereignisbestätigungssignalen an die Pixel (101), **dadurch gekennzeichnet, dass**:
jedes Pixel ferner einen ersten Synchronisationsknoten (sy, sy₁) aufweist, wobei jedes Pixel, wenn es ein Auftreten des ersten Ereignisses detektiert, konfiguriert ist zum Warten, um ein Synchronisationssignal (501) an seinem ersten Synchronisationsknoten (sy, sy₁) zu empfangen, um das Ereignisindikationssignal (201) auf der ersten Leiterbahn (105) zu senden, oder ein Synchronisationssignal (401; 701) mittels seines ersten Synchronisationsknoten (sy) vor dem Senden des Ereignisindikationssignals (201) auf der ersten Leiterbahn (105) zu senden.

2. Vorrichtung nach Anspruch 1, wobei die Pixel (101) mit einer Ausleseschaltung (103) durch eine zweite Leiterbahn (301) mittels ihres ersten Synchronisationsknotens (sy, sy₁) verbunden sind.

3. Vorrichtung nach Anspruch 2, wobei jedes Pixel (101), wenn es ein Auftreten des ersten Ereignisses detektiert, geeignet ist zum:
Senden des Synchronisationssignals (401) auf der ersten Leiterbahn (301); und dann
nach einem vorbestimmten Zeitintervall (t) Senden des Ereignisindikationssignals (201) an die erste Leiterbahn (101).

4. Vorrichtung nach Anspruch 3, wobei die Dauer des Synchronisationssignals (401) kürzer ist als die Dauer des Ereignisindikationssignals (201).

5. Vorrichtung nach Anspruch 3 oder 4, wobei die Synchronisationssignale (401) durch die Ausleseschaltung (103) von der zweiten Leiterbahn (301) ausgelesen werden und durch die Ausleseschaltung (103) genutzt werden, um Vorgänge des Dekodierens der Ereignisindikationssignale (201), die von der ersten Leiterbahn (105) ausgelesen werden, zu synchronisieren.

6. Vorrichtung nach Anspruch 2, wobei die Ausleseschaltung (103) geeignet ist zum Anlegen an der zweiten Leiterbahn (301) des Synchronisationssignals (501) in der Form einer Folge von Synchronisationskanten, und wobei jedes Pixel (101), wenn es ein Auftreten des ersten Ereignisses detektiert, geeignet ist zum Warten auf eine nächste Synchronisationskante des Synchronisationssignals (501) und dann, beim Empfang dieser Kante zum Senden des Ereignisindikationssignals (201) auf der ersten Leiterbahn (105).

7. Vorrichtung nach Anspruch 1, wobei jedes Pixel (101) ferner einen zweiten Synchronisationsknoten (syₒ) aufweist, wobei die Pixel in einer Reihe durch ihre ersten (sy₁) und zweiten (syₒ) Synchronisationsknoten verbunden sind, wobei die Pixel (101) geeignet sind zum Zirkulieren des Synchronisationssignals in der Form eines Synchronisationszeichens (701) in der Reihe während einer Phase der Analyse einer Szene, so dass zu jeder Zeit ein einzelnes Pixel (101) der Reihe im Besitz des Synchronisationszeichens (701) ist.

8. Vorrichtung nach Anspruch 7, wobei jedes Pixel (101), wenn es ein Auftreten eines ersten Ereignisses detektiert, geeignet ist zum Warten, um ein Synchronisationszeichen (701) zu empfangen, und dann beim Empfang des Zeichens (701) zum Senden des Ereignisindikationssignals (201) auf der ersten Leiterbahn (105).

9. Vorrichtung nach Anspruch 7 oder 8, wobei der Start der Zirkulation des Zeichens (701) in der Pixelreihe (101) während einer Analysephase durch die Detektion eines ersten Ereignisses durch ein Pixel (101) der Vorrichtung ausgelöst wird.

10. Vorrichtung nach einem der Ansprüche 1 bis 9, wobei die Ausleseschaltung (103) basierend auf dem von der ersten Leiterbahn (105) ausgelesenen Signal (203) geeignet ist zum Detektieren aller Ereignisse, die durch die Pixel (101) signalisiert wurden, einschließlich dem Fall, wenn eine Vielzahl von Pixeln simultan ein Ereignisindikationssignal auf der ersten Leiterbahn (105) sendet.

11. Vorrichtung nach Anspruch 10, wobei verschiedene Pixel (101) geeignet sind zum Senden von Strom- oder Spannungsereignisindikationssignalen (201) mit unterschiedlichen Formen auf der ersten Leiterbahn (105), wenn sie ein Auftreten des ersten Ereignisses detektieren.

12. Vorrichtung nach Anspruch 11, wobei die Ausleseschaltung (103) geeignet ist zum Analysieren der Formen der von der ersten Leiterbahn (105) ausgelesenen Ereignisindikationssignale (201) und zum Ableiten der Positionen der Pixel (101) davon , die diese Signale gesendet haben zum Rekonstruieren eines Szenenbildes.

13. Vorrichtung nach Anspruch 10, wobei die Ereignisindikationssignale (201) die auf der ersten Leiterbahn (105) durch die verschiedenen Pixel (101) gesendeten wurden, wenn sie ein Auftreten eines ersten Ereignisses detektieren, Stromsignale sind, die die gleiche Form besitzen.

14. Vorrichtung nach einem der Ansprüche 1 bis 13, die Pixel (101) von verschiedener Natur aufweist, die geeignet sind zum Detektieren von Ereignissen unterschiedlicher Naturen, wobei die durch die Pixel gesendeten Ereignisindikationssignale (201) die gleiche Form für Pixel der gleichen Natur besitzen und unterschiedliche Formen für Pixel unterschiedlicher Natur.

15. Vorrichtung nach einem der Ansprüche 1 bis 14, wobei die Ausleseschaltung (103) geeignet ist zum Zählen der Ereignisindikationssignale (201), die von der ersten Leiterbahn (105) während vorbestimmten Zeitperioden einer Analysephase ausgelesen werden, um ein Histogramm, das charakteristisch für die Szene ist, zu konstruieren.

16. Vorrichtung nach einem der Ansprüche 1 bis 15, wobei jedes Pixel (101) ferner geeignet ist zum Detektieren eines Auftretens eines zweiten Ereignisses, das charakteristisch für die Szene ist, und, wenn es ein Auftreten eines zweiten Ereignisses detektiert zum Senden eines Ereignisindikationssignals (201), das sich von dem Ereignisindikationssignal (201) unterscheidet, das es sendet, wenn es ein Auftreten des ersten Ereignisses detektiert, auf der ersten Leiterbahn (105).

## Claims

1. An electronic device for analyzing a scene, comprising a plurality of pixels (101) connected to a readout circuit (103) by a same first conductive track (105), wherein:
each pixel (101) is capable of detecting an occurrence of a first event characteristic of the scene and of transmitting an event indication signal (201) on the first conductive track (105) when it detects an occurrence of the first event; and
the readout circuit (103) is capable of reading from the first conductive track (105) the event indication signals (201) transmitted by the pixels (101), and of deducing therefrom characteristics of the scene, without transmitting event acknowledgement signals to the pixels (101), **characterized in that**:
each pixel further comprises a first synchronization node (sy, syᵢ), each pixel being configured to, when it detects an occurrence of the first event, wait to receive a synchronization signal (501) on its first synchronization node (sy, syᵢ) to transmit the event indication signal (201) on the first conductive track (105), or transmit a synchronization signal (401; 701) via its first synchronization node (sy) before transmitting the event indication signal (201) on the first conductive track (105).

2. The device of claim 1, wherein the pixels (101) are connected to the readout circuit (103) by a second conductive track (301), via their first synchronization node (sy, syᵢ).

3. The device of claim 2, wherein each pixel (101) is capable, when it detects an occurrence of the first event, of:
transmitting the synchronization signal (401) on the second conductive track (301); and then
after a predetermined time interval (t), transmitting the event indication signal (201) on the first conductive track (101) .

4. The device of claim 3, wherein the duration of the synchronization signal (401) is shorter than the duration of the event indication signals (201).

5. The device of claim 3 or 4, wherein the synchronization signals (401) are read by the readout circuit (103) from the second conductive track (301) and are used by the readout circuit (103) to synchronize operations of decoding of the event indication signals (201) read from the first conductive track (105).

6. The device of claim 2, wherein the readout circuit (103) is capable of applying on the second conductive track (301) the synchronization signal (501) in the form of a succession of synchronization edges, and wherein each pixel (101) is capable, when it detects an occurrence of the first event, of waiting for a next synchronization edge of the synchronization signal (501) and then, on reception of this edge, of transmitting the event indication signal (201) on the first conductive track (105).

7. The device of claim 1, wherein each pixel (101) further comprises a second synchronization node (syₒ), the pixels being connected in a chain closed by their first (syᵢ) and second (syₒ) synchronization nodes, the pixels (101) being capable of circulating the synchronization signal in the form of a synchronization token (701) in the chain during a phase of analysis of a scene, so that, at any time, a single pixel (101) of the chain is in possession of the synchronization token (701).

8. The device of claim 7, wherein each pixel (101) is capable, when it detects an occurrence of the first event, of waiting to receive the synchronization token (701), and then, on reception of the token (701), of transmitting the event indication signal (201) on the first conductive track (105).

9. The device of claim 7 or 8, wherein the starting of the circulation of the token (701) in the pixel chain (101) during an analysis phase is triggered by the detection of a first event by a pixel (101) of the device.

10. The device of any of claims 1 to 9, wherein the readout circuit (103) is capable, based on the signal (203) read from the first conductive track (105), of detecting all the events signaled by the pixels (101), including when a plurality of pixels simultaneously transmit an event indication signal on the first conductive track (105).

11. The device of claim 10, wherein different pixels (101) are capable of transmitting on the first conductive track (105) current or voltage event indication signals (201) having different shapes when they detect an occurrence of the first event.

12. The device of claim 11, wherein the readout circuit (103) is capable of analyzing the shapes of the event indication signals (201) read from the first conductive track (105), and of deducing therefrom the positions of the pixels (101) having transmitted these signals to reconstruct an image of the scene.

13. The device of claim 10, wherein the event indication signals (201) transmitted on the first conductive track (105) by the different pixels (101) when they detect an occurrence of the first event are current signals having the same shape.

14. The device of any of claims 1 to 13, comprising pixels (101) of different natures capable of detecting events of different natures, the event indication signals (201) transmitted by the pixels having the same shape for pixels of same nature and different shapes for pixels of different natures.

15. The device of any of claims 1 to 14, wherein the readout circuit (103) is capable of counting the event indication signals (201) read from the first conductive track (105) during predetermined time periods of an analysis phase, to construct a histogram characteristic of the scene.

16. The device of any of claims 1 to 15, wherein each pixel (101) is further capable of detecting an occurrence of a second event characteristic of the scene and, when it detects an occurrence of the second event, of transmitting on the first conductive track (105) an event indication signal (201) different from the event indication signal (201) that it transmits when it detects an occurrence of the first event.
